# EUROPEAN PATENT SPECIFICATION

(11) **EP 1 481 031 B1**
(45) Date of publication and mention of the grant of the patent: **18.07.2007**
(21) Application number: 03711376.8
(22) Date of filing: 03.03.2003
(51) Int. Cl.: C09J 7/02, B32B 27/40, B32B 27/42

(54) **MARKING FILM, RECEPTOR SHEET AND MARKING FILM FOR VEHICLES**
MARKIERUNGSFOLIE, EMPFANGENDES BAHNENMATERIAL SOWIE MARKIERUNGSFOLIE FÜR FAHRZEUGE
FILM DE MARQUAGE, FEUILLE DE RECEPTION ET FILM DE MARQUAGE DESTINE A DES VEHICULES

(30) Priority: 05.03.2002 JP 2002058391
(43) Date of publication of application: 01.12.2004
(73) Proprietor: 3M Innovative Properties Company, St. Paul, MN 55133-3427 (US)
(72) Inventor: ABE, Hidetoshi, Saint Paul, MN 55133-3427 (US); ENDOH, Hideto, Saint Paul, MN 55133-3427 (US)
(74) Representative: Vossius & Partner
(86) International application number: PCT/US2003/006476
(87) International publication number: WO 2003/076542

(56) References cited:
- EP-A- 1 004 608
- WO-A-99/35201
- US-A- 3 959 562

## Description

The present invention relates to an improved marking film comprising a receptor film which receives a colorant such as a toner to form an image (an image-displaying layer) or a coloring layer, and an adhesive layer having an uneven adhesion surface. The marking film of the present invention can be adhered to the body surface of a vehicle that moves using a petroleum fuel, in particular, diesel oil, as an energy source. The present invention further relates to a receptor sheet suitable for use in the production of a marking film of the present invention.

A receptor sheet can be used to produce a marking film. On the front surface of the receptor sheet, an image (an image-displaying layer) or a coloring layer can be formed by applying a toner or an ink as a colorant. The receptor sheet usually comprises a receptor film, which includes a base layer, and a receptor layer, which comprises a thermoplastic resin film provided on the surface of the base layer. In general, an adhesive layer is provided on the back surface of the receptor film to allow the receptor sheet to be adhered to an adherend.

The marking film is produced by forming an image, etc. on the surface of the receptor sheet (i.e. on the surface of the receptor film) by, for example, electrostatic toner printing. When the printed surface (the colorant-receptive surface of the receptor layer) requires protection, it is covered with a protective film. A polymer film made of a fluoropolymer, an acrylic polymer or a phthalate polyester (e.g. polyethylene terephthalate), etc. having transparency such that the toner (the image, etc.) can be seen through the film can be used as the protective film.

The thermoplastic resin film of the receptor layer may be formed from various resin compositions. For example, JP-A-9-507309 discloses the use of a flexible thermoplastic resin film for a receptor layer of a receptor film comprising a polyurethane-acrylic copolymer latex rubber, an acrylic resin, a vinyl chloride copolymer such as a vinyl chloride-vinyl acetate copolymer and a plasticizer. JP-B-3080674 discloses the use of an acrylic resin, polyolefin, polyvinyl acetal, polyvinyl chloride, polyurethane, etc. as the resin material of a receptor layer or a base layer. However, it has not been proposed to use a phenoxy resin as the resin material of a receptor layer or a base layer.

It is also known to providing a marking film with an adhesive having an uneven adhesion surface to prevent air trapping (i.e. permit the escape of bubbles) between the adhesive layer and an adherend, when the marking film (or the receptor film) is adhered (applied) to the adherend. Such an adhesive layer has projections and depressions surrounding the projections, and further grooves which are defined by the depressions, wherein the grooves communicate with the atmosphere, that is, conduits are formed between the adherend surface and the adhesion surface of the adhesive layer.

Unevenness on the adhesion surface can be formed by laminating a release paper (a liner) having a release surface with unevenness onto the adhesive layer. A marking film using such an uneven release paper is disclosed in WO 00/6985, US Patent No. 6,203,885, JP-A 2001-507732, JP-Utility Model-2,503,717, JP-Utility Model-2,687,198, etc. It is also known to effectively form depressions around projections by adding elastic microspheres to an adhesive layer to form projections containing the elastic microspheres on the adhesion surface. A marking film using such elastic microspheres is disclosed in JP-A-8-113768.

In the case of a marking film having an uneven adhesion surface, usually the above conduits are present between the adherend and the adhesive layer after the completion of application of the film. Therefore, when such a marking film is adhered to and used on the body surface of a vehicle such as a bus or a truck, a petroleum fuel, which overflows around a fuel-filling opening during filling, will fill the conduits due to a capillary action and spread in a relatively wide area of the adhesion surface (or the adherend surface). It is found that the fuel spread in such a way will permeate into the inside of the film through the adhesive layer and swell the film. The swelling with the fuel, in particular with diesel oil, deteriorates the appearance of the marking film due to peeling of the marking film from the adherend, or the peeling of the layers of the marking film.

EP-A-1 004 608 relates to a certain multi-layer sheet comprising a protective polyurethane layer. In WO 99/35201 a certain adhesive sheet comprising a flexible substrate film is disclosed.

The above patent publications do not suggest any improvement of a marking film for a vehicle, wherein the marking film is adhered to the body surface of a vehicle using a petroleum - resistant resin. That is, they do not disclose the selection and the use of specific resins to effectively suppress the above-described deterioration of the appearance of the marking film due to swelling caused by a petroleum fuel such as diesel oil. For example, the deterioration of the appearance of the marking film due to swelling is remarkable when the receptor film contains polyolefin. A receptor layer containing polyurethane swells less, but in general polyurethane has low moisture resistance, and thus the edge of the marking film tends to be peeled from the adherend and turns up, when the marking film is used outside where it is exposed to wind and weather for a relatively long time (for example, six months).

Accordingly, an object of the present invention is to provide a marking film which has good resistance to petroleum fuel and moisture and is suitable as a marking film for a vehicle that moves using a petroleum fuel.

To solve the above problems, the present invention provides a marking film comprising:
(a) a receptor film having a front colorant-receptive surface, and a back surface opposing to said front surface, and
(b) an adhesive layer fixedly provided on said back surface of the receptor film,
wherein the adhesive layer comprises an adhesive for adhering said receptor film to an adherend;
wherein said adhesive layer has projections containing said adhesive, which are formed on an adhesion surface to be adhered to said adherend, and depressions surrounding said projections, and said depressions define conduits which communicate with the atmosphere between the surface of said adherend and the adhesion surface-of said adhesive layer when said adhesive layer is adhered to said adherend,
characterized in that said receptor film comprises a receptor layer formed of a thermoplastic resin film having a surface which serves as said colorant-receptive surface, and said thermoplastic resin film comprises a resin component containing at least one petroleum-resistant resin selected from the group consisting of polyurethane comprising polyol units derived from polycaprolactone polyol and phenoxy resins.

The present invention also provides a receptor sheet suitable for use in the production of the marking film of the present invention, comprising said receptor film and said adhesive layer fixedly provided on the back surface of said receptor film which has a receptor layer comprising a thermoplastic resin film having a surface acting as said colorant-receptive surface to which a toner is transferred, wherein said thermoplastic resin film comprises a resinous component containing at least one petroleum-resistant resin selected from polyurethane comprising polyol units derived from polycaprolactone polyol and phenoxy resins, and said receptor layer has a glass transition temperature of 0 to 100°C.

In the marking film of the present invention, the receptor layer contains at least one petroleum-resistant resin selected from the above group. Accordingly, the marking film of the present invention can effectively prevent the swelling caused by the penetration of the petroleum fuel such as diesel oil or gasoline to the receptor layer through the adhesive layer. Therefore, the deterioration of the appearance of such a marking film caused by penetration of fuel when the marking film is adhered to and used on the body surface of a vehicle powered by petroleum fuel can effectively be prevented. In addition, the petroleum-resistant resin has good moisture resistance, since it has good resistance to hydrolysis. Accordingly, the marking film of the present invention can effectively suppress the turning up of the edge of the marking film when it is used outdoors where it is exposed to rain and weather.

If the surface of the receptor film may possibly be wet with diesel oil, it is preferable to protect the image-forming surface (the surface receiving the colorant) of the receptor film with a protective film comprising a fluororesin. Furthermore, it is effective to use a protective film made of a resin composition containing at least one petroleum-resistant resin selected from the above group.

Although the receptor film may have a base layer provided between the receptor layer and the adhesive layer, it preferably consists of the receptor layer, whereby the thickness of the marking film can be reduced and the flexibility of the marking film as a whole can be increased so that the applicability of the marking film to an adherend having a curved surface is effectively improved.

When the receptor film includes a base layer, the base layer preferably comprises at least one petroleum-resistant resin selected from the above group. Thus, the base layer functions as a barrier layer and the penetration of a fuel such as diesel oil into the receptor layer can more effectively be suppressed.

According to the present invention, the film or layer containing the petroleum-resistant resin may be designed to contain substantially no vinyl chloride polymer. Today, there is a demand in the market for marking films containing substantially no vinyl chloride resin, that is, so-called vinyl chloride-free marking films. The present invention can supply vinyl chloride-free marking films having good resistance to petroleum which meet such needs.

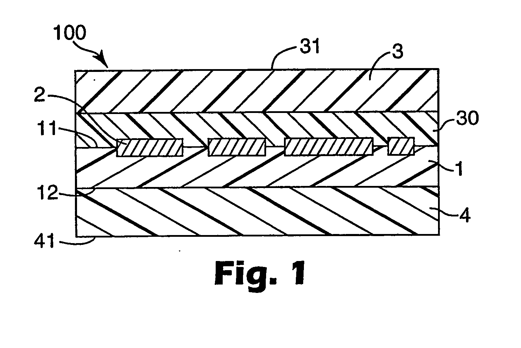

Fig. 1 is a cross-sectional view of one embodiment of the marking film of the present invention.

One preferred embodiment of the marking film of the present invention will be explained by making reference to Fig. 1.

Fig. 1 schematically shows one embodiment of the marking film of the present invention. The receptor film (1) of the marking film (100) consists of a single layer of a receptor layer made of a thermoplastic film. The thermoplastic film contains a petroleum-resistant resin, as described above. The receptor film (1) has a front surface (11) and a back surface (12), and the front surface (11) receives a colorant, for example a toner (2). The toner (2) forms an image, which is visible from the side of the outermost surface (31) of the protective film (3) through the protective film (3).

The adhesive layer (4) is fixedly provided on the back surface (12) of the receptor film (1). Although not shown in Fig. 1, the projections comprising the adhesive (not shown) and the depressions (not shown) surrounding the projections are formed on the adhesion surface (41) of the adhesive layer (4), and the conduits (not shown) which are defined by the depressions and communicate with the atmosphere are formed between the adhesion surface (41) and the surface of the adherend, when the marking film is adhered to the adherend.

The adhesive of the adhesive layer (4) is not limited, and is usually a pressure-sensitive adhesive comprising a self-adherent polymer. As the pressure-sensitive adhesive layer, for example, a single-layer pressure-sensitive adhesive film containing a self-adherent polymer, or a double-coated adhesive sheet having two pressure-sensitive adhesive layers is preferably used.

To adhere the protective film (3) to the receptor film (1), an adhesive layer (30) for the protective film is usually used. The adhesive of the adhesive layer (30) for the protective film is not limited, and is usually a pressure-sensitive adhesive comprising a self-adherent polymer, since such an adhesive layer can follow the unevenness formed by the toner (2) on the surface (11) of the receptor film so that the protective film (3) and the receptor film (1) can be closely adhered to each other while no bubbles are formed between them. Such bubbles decrease the visibility of the image, and thus it is preferable to prevent bubble entrapment.

### Receptor sheet

The receptor sheet of the present invention is the receptor film (1) with the adhesive layer (4). A colorant such as a toner is applied to the film (1), and the adhesive layer is used to adhere the receptor film (1) to an adherend.

The receptor film (1) usually comprises (i) a single layer film of the thermoplastic resin film comprising the petroleum-resistant resin, or (ii) a laminate film having a receptor layer and a base layer provided between the receptor layer and the adhesive layer. In the latter case (ii), preferably the base layer is also a resin film comprising the petroleum-resistant resin.

The petroleum resistance of the resin film can be evaluated as follows:

A sample of a resin film having a specific size is provided. On the surface of this sample, a drop (about 0.01 to 0.02 g) of diesel oil is dropped and allowed to stand at room temperature for 10 minutes. The sample is then visually observed. When no wrinkles are formed, the resin film is judged to have good petroleum resistance. When the resin film has a high resistance to diesel oil (petroleum resistance using diesel oil), the swelling of the sheet with other petroleum fuels such as gasoline can be effectively prevented.

The petroleum resistance of a receptor sheet (having an adhesive layer) can be evaluated as follows:

A sample of a receptor sheet having a specific size is adhered to a test adherend (e.g. melamine coated plate). In this step, conduits communicating with the atmosphere are formed between the surface of the adherend and the adhesive layer. A part of the sample adhered to the adherend is dipped in diesel oil at room temperature for 8 hours, and then removed from the diesel oil and allowed to dry in the shade (i.e., out of direct sunlight) at room temperature for 16 hours. The dry sample is visually observed. The receptor sheet is judged to have good petroleum resistance when no wrinkles are formed, and neither peeling of the sheet from the adherend nor peeling of the layers from each other (peeling between the receptor film and the adhesive layer, etc.) are observed. The petroleum resistance of a marking film can be evaluated in the same manner as above.

In general, the moisture-resistance of a resin film is evaluated as follows:

A resin film is adhered to a melamine-coated plate with an adhesive to obtain a sample. The sample is placed in an oven and conditioned at 65°C, 95% relative humidity ("RH") for one week. Then, the edge of the film is checked to determine whether it is turned up or not. When no edges are turned up under such conditions, the film is judged to have good moisture-resistance. The adhesive used to adhere the resin film to the melamine-coated plate is usually a pressure-sensitive acrylic adhesive. Alternatively, an adhesive, which is actually used to adhere a marking film to an adherend, may be used. The moisture resistance of a marking film can be evaluated in the same manner as above.

The polyurethane to be used as a petroleum-resistant resin is a polymer obtained by polymerizing a raw material containing the above polyol (polycaprolactone polyol) and a diisocyanate. The raw material may contain a short-chain diol such as neopentyl glycol, ethylene glycol, propylene glycol, etc. as a chain extender. Examples of the diisocyanate include isophorone diisocyanate (IPDI), diphenylmethane diisocyanate (MDI), hydrogenated MDI, 1,6-hexanediol diisocyanate, tolylene diisocyanate (TDI), tetramethylxylylene diisocyanate (TMXDI), etc. The raw material may contain one or more polyols, and one or more diisocyanates.

The type (chemical structure) of the diisocyanate in the raw material, and the ratio of the short-chain diol to polyol which is optionally contained in the polyol is selected so that the properties of the thermoplastic resin film containing the polyurethane (e.g. a glass transition temperature, a complex dynamic viscosity and a Vicat softening point) fall within optimum ranges.

The glass transition temperature of the thermoplastic resin film of the receptor layer is usually from 0 to 100°C. When the glass transition temperature of the receptor layer is too high, the toner-transferability of the receptor layer deteriorates so that a clear image may not be formed. In addition, when the glass transition temperature is too high, the flexibility of the marking film as a whole tends to decrease. When the glass transition temperature is less than 0°C, the petroleum resistance may deteriorate. Furthermore, the glass transition temperature of the receptor layer is preferably 0°C or higher to effectively decrease the room temperature tack of the colorant-receptive surface. When the receptor layer has such a glass transition temperature, undesirable adherence of the marking film to itself or other items prior to being covered with the protective film can be effectively prevented. Accordingly, the marking film precursor or the receptor sheet can be easily unwound from a roll after it has been stored in a rolled form.

The glass transition temperature of the receptor layer is preferably from 10 to 90°C, and more preferably from 20 to 80°C, for a better balance of properties such as the improvements of petroleum resistance, the toner-transfer properties, the decrease of room temperature tack and increased film flexibility.

The glass transition temperature (Tg) of the thermoplastic resin film of the receptor layer, etc. is measured by providing a film having a thickness of about 10 µm (usually 8 to 20 µm) as a sample and placing this sample in a DSC (differential scanning calorimeter). In the measurement, the temperature is raised from -50°C to 120°C (first scanning), and then a glass transition temperature is read from an inflection point corresponding to a secondary transition point in the first scanning.

Besides the glass transition temperature, one property of the thermoplastic resin film to be noted is a Vicat softening point of the thermoplastic resin film, which is measured using a viscoelastic spectrometer at 25°C. The Vicat softening point of the thermoplastic resin film is usually from 30 to 95°C, preferably from 40 to 93°C. When the Vicat softening point is too high, it may be difficult to transfer the toner to the resin film. When the Vicat softening point is too low, the mechanical strength of the resin film decreases so that the durability of the marking film tends to deteriorate.

The Vicat softening point is the softening point measured according to Japan Industrial Standards (JIS) K 7206 by raising a temperature of a sample at a constant rate while applying a specific load to a needle-shape penetrator, which is maintained perpendicular to the sample (the thermoplastic resin film), and measuring the temperature at which the penetrator penetrates into the sample by 1 mm.

The number of carbon atoms in the hydrocarbon backbone of the polyol is preferably from 5 to 7. When the number of carbon atoms exceeds 7, the petroleum resistance of the thermoplastic resin film may deteriorate. When the number of carbon atoms is less than 5, the thermal transfer properties of the toner may deteriorate.

The molecular weight of the polyurethane is not limited, and its weight average molecular weight is usually from 20,000 to 1,000,000.

The phenoxy resin also has high petroleum resistance and moisture resistance. This is because the phenoxy resin has repeating units derived from a bisphenol in the molecule. As the phenoxy resin, those conventionally used for paints can be used. Specific examples of commercially available phenoxy resins include "YP 50S" (trade name available from TOTO Chemical Co., Ltd. "PKHH" trademark available from Phenoxy Specialties. The molecular weight of the phenoxy resin is not limited insofar as it has sufficient toughness, and its weight average molecular weight is usually from 20,000 to 1,000,000.

The phenoxy resin is advantageous for increasing the toughness of the receptor film since it has higher strength at break than polyurethane. The increase of the toughness of the receptor film can prevent the breakage of the marking film when the marking film is peeled for replacement and effectively decreases the workload for peeling.

When the phenoxy resin is used, it is preferably used in combination with polyurethane, since the flexibility and toughness of the receptor film can be easily increased with good balance. In such a case, the weight percentage of polyurethane in the mixture with the phenoxy resin is usually at least 60 %, preferably at least 65 %, and more preferably at least 70 %. The polyurethane to be used in combination with the phenoxy resin is usually polycarbonate polyurethane or polycaprolactone polyurethane. The particularly preferred polyurethane is a polyurethane having polyol units derived from polycarbonate polyol in the molecule (polycarbonate polyurethane). The polycarbonate polyurethane has good weather resistance in addition to the moisture resistance, and thus effectively prevents the deterioration or coloring of a film comprising the same. The coloring of the protective film or the receptor film can cause an apparent discoloration of the image. Therefore, the receptor film and protective film which are less colored are advantageous as elements of the marking film used outdoors, in particular, marking films for vehicles. When the percentage of polyurethane is 70 % or less, other polyurethanes may be used.

The resin component constituting the receptor layer (and the base layer) may contain other resins insofar as the effects of the present invention are not impaired. One example of such other resins is an acrylic resin. The acrylic resin is a polymer prepared by polymerizing a (meth)acrylic monomer mixture. The (meth)acrylic monomer mixture usually contains a (meth)acrylate having 1 to 10 carbon atoms in an alkyl group and a copolymerizable monomer. The copolymerizable monomer is preferably a hydrophilic monomer such as a hydroxy(meth)acrylate, an alkylene glycol diacrylate, acrylic acid, or a methacrylic acid and the like to increase the petroleum resistance. The acrylic resin can be prepared by polymerizing such a monomer mixture by a conventional polymerization method such as solution polymerization. The ratio of the monomers is selected so that the glass transition temperature and other properties of the thermoplastic resin film are in optimum ranges. The molecular weight of the acrylic resin is not limited, and its weight average molecular weight is usually from 20,000 to 1,000,000.

The amount of the petroleum-resistant resin in the entire resin composition of the thermoplastic resin film used as the receptor layer or the base layer is usually at least 70 % by weight. To further increase the petroleum resistance of the film, the amount of the petroleum-resistant resin in the total resin composition is preferably at least 80 % by weight, and more preferably at least 90 % by weight.

The receptor sheet may be prepared as follows:

The thermoplastic resin film forming the receptor layer can be prepared by a conventional film-forming method. For example, a coating composition comprising the resin component is applied on the release surface of a liner and solidified to form the thermoplastic resin film. As an application apparatus, a conventional coater such as a bar coater, a knife coater, a roll coater or a die coater and the like may be used. The solidification is drying in the case of a coating solution containing a volatile solvent or is cooling in the case of a molten resin coating composition. Alternatively, the thermoplastic resin film can be formed by a melt extrusion method.

When the receptor sheet comprises a base layer and a receptor layer, it can be produced as follows :

First, a receptor layer is formed on the liner, and then a composition containing the resin component for the base layer is applied on the receptor layer with the liner and solidified. Thereby, the receptor film comprising the film laminate is obtained. Another layer such as a primer layer or an adhesive layer may be provided between the receptor layer and the adhesive layer so long as the effects of the present invention are not impaired.

Then, the adhesive layer is applied to the back surface of the receptor film, produced as described above.

The adhesive layer is formed by applying a coating liquid containing the adhesive to the release surface of a liner and solidified to obtain an adhesive layer on the liner, and then the adhesive layer on the liner is laminated onto and adhered to the receptor film. Thereby, the receptor sheet of the present invention is finished.

The thickness of the receptor film as a whole is usually from 20 to 150 µm, preferably from 30 to 100 µm. When the receptor film is too thin, the mechanical strength of the film decreases and therefore the receptor sheet may be broken when the marking film is peeled from the adherend. When this thickness is too large, the flexibility of the marking film including the receptor sheet may decrease.

### Adhesive sheet

As the adhesive sheet for adhering the marking film (or the receptor film) to the adherend, an uneven adhesive layer as described above is formed. To form an uneven adhesive layer, any of the methods disclosed in the prior art publications cited above can be used. One example of such methods is explained below:

First, a liner having a release surface with a specific uneven structure is provided. On the release surface of the liner, a coating composition containing a self-adherend polymer (an adhesive composition for forming the adhesive layer of the adhesive sheet) is applied and solidified to form an adhesive layer. Thereby, the uneven structure (negative image) of the liner is transferred to the surface of the adhesive layer which is in contact with the liner (this surface forming the adhesion surface of the adhesive sheet), and thus the uneven adhesion surface having the specific structure (positive) thereon is formed. The uneven structure of the adhesion surface is designed so that it includes grooves which can form the conduits when the projections are in contact with the adherend.

Such grooves of the adhesive layer may be provided on the adhesion surface so that grooves having a specific shape are arranged in a regular pattern, or grooves having irregular shapes can be arranged irregularly, so that entrapment of bubbles can be prevented when the marking film is used. When a plurality of grooves is arranged substantially in parallel, the distance between the grooves is preferably from 10 to 2,000 µm. The depth of the groove (the distance from the adhesion surface to the bottom of the groove in the direction toward the receptor film) is usually from 10 to 100 µm. The shape of the groove is not limited so long as the effects of the present invention are not impaired. For example, a cross-section of the groove vertical to the adhesion surface can be a rectangle (including a trapezoid), a semicircle, a semi-ellipse or the like.

The liner is usually made of a paper sheet or a plastic film. A paper liner is generally prepared by laminating a release coat (a release layer) such as a polyethylene layer, a silicone layer, etc. onto the surface of the paper sheet. When a silicone release layer is laminated, usually an underlayer such as a clay coating, a polyethylene layer, etc. is laminated first, and then the release coat is laminated. The uneven structure of the liner can be formed by pressing the release surface against a tool for transferring unevenness after the release coat is laminated.

The adhesive layer may be formed from a coating film of an adhesive comprising a self-adherend polymer. A preferred adhesive contains a self-adherent polymer and a crosslinking agent for crosslinking the self-adherent polymer.

Herein, the self-adherent polymer means a polymer having tackiness at room temperature (about 25°C). Examples of such a self-adherent polymer include acrylic polymers, polyurethane, polyolefin, polyester, etc.

One example of the synthesis of a self-adherent polymer is explained by making reference to an acrylic polymer.

As a first monomer, an acrylic unsaturated acid (e.g. acrylic acid, methacrylic acid, itaconic acid, maleic acid, etc.) or a polar (meth)acrylic monomer (e.g. acrylonitrile, etc.) is provided. The first monomer is mixed with an acrylic monomer as the second monomer to obtain a monomer mixture. As the second monomer, an alkyl acrylate such as isooctyl acrylate, butyl acrylate, 2-methylbutyl acrylate, 2-ethylhexyl acrylate, isononoyl acrylate, etc. may be used.

The monomer mixture is polymerized by a conventional polymerization method such as solution polymerization, emulsion polymerization, bulk polymerization, etc. to synthesize a self-adherent polymer having a specific desired molecular weight and a desired molecular weight distribution for vehicle marking film.

When a crosslinking agent is used to crosslink the self-adherent polymer, the amount of the crosslinking agent is usually from 0.02 to 2 wt. parts, preferably from 0.03 to 1 wt. part, per 100 wt. parts of the self-adherent polymer, although it depends on the kind of the crosslinking agent. Examples of crosslinking agents include isocyanate compounds, melamine compounds, poly(meth)acrylate compounds, epoxy compounds, amide compounds, bisamide compounds (e.g. bisaziridine derivatives of dibasic acids such as isophthaloyl bis(2-methylaziridine), etc.).

The glass transition temperature (Tg) of the adhesive layer is preferably from -50 to -10°C, and more preferably from -40 to -5°C. When the Tg of the adhesive layer is too high, the adhesion between the adherend and the marking film may deteriorate. When the Tg is too low, the adhesive may squeeze out from the edge of a roll of the marking film when the marking film is stored in a rolled form, and thus the sticking of the piled parts of the marking film may not be prevented.

Here, Tg of the adhesive layer is calculated from tan δ which is measured using a dynamic viscoelastometer. The measuring conditions include a torsion mode at a shear rate of 1 radian/sec., a heating temperature range of -60 to 100°C, and a heating rate of 5°C/sec. The thickness of the sample is usually from 1 to 2 mm.

The thickness of the adhesive layer is usually from 20 to 100 µm, preferably from 25 to 80 µm.The pressure-sensitive adhesive layer may contain various additives such as tackifiers, elastic microspheres, microspheres of tacky polymers, crystalline polymers, inorganic powders, ultraviolet ("UV") absorbers, etc.

### Protective film

The protective film has light transmission properties as a whole. The light transmittance of the protective film is usually at least 60 %, preferably at least 70 %, and more preferably at least 80 %. Here; the light transmittance is the total light transmittance measured with a spectrophotometer or a color meter which functions also as a photometer at a wavelength of 550 nm.

The protective film preferably comprises a resin film having a resin with high transparency. Examples of such a resin of the resin film include fluorocarbon resins, phthalate based polyesters (e.g. PET, PEN, etc.), acrylic resins, and the petroleum-resistant resins described above, etc. The fluorocarbon resin is a polymer obtained by polymerizing at least one fluorine-containing monomer. Examples of fluorine-containing monomers include fluorine-containing ethylene monomers such as vinylidene fluoride, hexafluoropropylene, tetrafluoroethylene, trifluorochloroethylene, etc. In addition, one or more monomers copolymerizable with the fluorine-containing monomer such as a methacrylate (e.g. methyl methacrylate, ethyl methacrylate, propyl methacrylate, butyl methacrylate, etc.) and an acrylate (e.g. methyl acrylate, ethyl acrylate, propyl acrylate, butyl acrylate, etc.) may be mixed with the fluorine-containing monomer(s). The starting monomer may contain other copolymerizable monomers such as an acrylic monomer (e.g. methyl methacrylate, ethyl methacrylate, etc.) in addition to the fluorine-containing monomer.

Furthermore, the protective film may be made of a resin composition comprising a fluororesin (fluorocarbon resin) and an acrylic resin.

When the marking film of the present invention is used as a marking film for a vehicle powered by a petroleum fuel as an energy source, the resin of the protective film is preferably a fluororesin or a petroleum-resistant resin. In such a case, the percentage of fluororesin or petroleum-resistant resin of the resin components constituting the protective film is usually at least 70 % by weight, preferably at least 80 % by weight, and more preferably at least 90 % by weight. When the protective film contains both a fluororesin and a petroleum-resistant resin, the total percentage by weight of the two resins together is preferably in the above range.

The thickness of the protective film is usually from 5 to 120 µm, and preferably from 10 to 100 µm. When an adhesive layer is used to adhere the protective film to the receptor film, it usually has a thickness of 20 to 100 µm, and preferably 25 to 80 µm.

### Formation of image

The colorant is usually a toner or an ink. For example, when an image is formed by transferring the toner to the receptor layer, a conventional printing method such as an electrostatic printing method is used to transfer the toner to the back surface of the protective film. Electrostatic printing methods include a direct-print method in which an image is directly printed on the back surface of the protective film and a transfer method in which an image is printed on a temporary support and then is transferred to the protective film. In the transfer method, the image is first formed on a temporary support, which may be called a transfer medium, and then transferred to the back surface of the protective film with heating and pressure to obtain a protective film having a printed image.

The toner used to form the image contains a binder resin and a pigment dispersed in the binder resin. The binder resin may be a resin selected from the group consisting of acrylic resins and polyester resins and mixtures thereof.

Details of electrostatic printing methods are disclosed in JP-A-4-216562, JP-A-11-513818, etc.

### Examples

### Example 1

A receptor sheet in this Example was produced as follows:

A polycarbonate polyurethane and a phenoxy resin were mixed in a weight ratio of 70:30, and then dissolved in toluene to obtain a coating solution for a receptor layer. The polyurethane was prepared by polymerizing a raw material containing 1,6-hexanediol carbonate polyol and hexamethylene diisocyanate. The polyurethane was prepared by solution polymerizing. The phenoxy resin was "PKHH" (trademark) available from Phenoxy Specialties, USA.

This coating solution was applied on a polyester carrier (a liner of a polyester film having a thickness of 50 µm and having a release layer) to a dry thickness of 10 µm, and then dried to obtain a receptor layer comprising a transparent thermoplastic resin film. The receptor layer (the thermoplastic resin film) had a Tg of 24°C. The polyurethane had a Tg of 34°C, and the phenoxy resin had a Tg of 72°C.

On the back surface of the receptor layer (the surface in contact with the carrier serving as a colorant-receptive surface), a solution of a polyester polyurethane REZAMIN^{®} NE310 available from DAINICHI SEIKA Co., Ltd. was applied to obtain a dry thickness of 33µmand dried to form a base layer. Thereby, a receptor film consisting of a laminate of the receptor layer and the base layer was obtained.

Separately, a coating composition for an adhesive layer was applied onto a release surface of a liner having a regularly patterned unevenness on the release layer with a knife coater to obtain a dry thickness of 40 µm and dried at 90°C for 5 minutes. This coating composition was prepared by mixing a self-adhesive acrylic polymer, a crystalline polyurethane and a bisamide crosslinking agent in a mixed solvent of ethyl acetate and toluene. The weight ratio of self-adherent polymer:crystalline polyurethane:crosslinking agent was 90:10:0.2 (the ratio of non-volatile components).

The acrylic self-adhesive polymer was a copolymer prepared by solution polymerizing a monomer mixture containing butyl acrylate, acrylonitrile and acrylic acid in a weight ratio of 93:3:4. The self-adherent polymer had a weight average molecular weight of 460,000 and a Tg of -21°C.

The crystalline polyurethane was prepared by polymerizing isophorone diisocyanate (IPDI) and polycaprolactone (PLACSEL^{®} 220 available from DAICEL Chemical Industries, Ltd.; weight average molecular weight = 6,000; weight average molecular weight/number average molecular weight = 1.8) in toluene. The molar ratio of polycaprolactone to IPDI was 2:1. The polyurethane had a weight average molecular weight of 13,000 and a ratio of weight average molecular weight to number average molecular weight of 2.2.

On the release layer of the above liner, a plurality of ridges corresponding to grooves to be transferred to the adhesive layer were continuously formed along the lines of a crosshatch so that the ridges intersected each other. The height of the ridge was 19.5 µm. Thus, the largest depth of the groove on the adhesion surface was 19.5 µm. The maximum distance between the adjacent ridges (the distance between the bottoms of the ridges) was 1.2 mm, and the width of the ridge was 55 µm. The vertical cross section of the ridge was a trapezoid. Correspondingly, the vertical cross section of the groove on the adhesive layer was also a trapezoid.

The adhesive layer with the liner, which was produced by the above method, was dry laminated on the back surface of the base layer of the receptor sheet, and then the polyester carrier was removed from the surface of the receptor layer to obtain the receptor sheet of this example.

Using the receptor sheet obtained, the marking film of this example was produced as follows:

A digital graphic for transfer was formed on a transfer medium (8601 J manufactured by 3M) with an electrostatic printing system (Scotchprint^{®} 59512 manufactured by 3M). Then, the transfer medium having the printed graphics was rolled up into a roll to obtain a medium-sized roll.

Then, the receptor sheet and the medium roll were set on a laminator (ORCA^{®} III available from 3M Company, St. Paul, Minnesota, USA), and the laminator was operated under the following conditions, and the toned image was transferred to the receptor sheet to obtain a roll of the marking film of this Example :
Image-transferring conditions
   - Temperature of an upper roll: 130°C
   - Temperature of a lower roll: 50°C
   - Web conveying speed: 70 cm/min.
   - Pressure setting: about 410 kPa (60 psi)

With the marking film of this example, the image observed through the protective film was clear.

The toner-adhesion test was carried out as follows:

One hundred cross-hatch cuts (size of each section: about 1 mm x about 1 mm) were formed on the toned image, and then an adhesive tape (#610 available from 3M Company) was adhered to the toned image. The adhesive tape was quickly peeled off. No transfer of the toner to the adhesive tape was observed, which confirmed that the adhesion between the toner and the receptor layer was good.

Separately, a transparent protective film was adhered to the toned image on the marking film (the colorant-receptive surface) with an adhesive to obtain a marking film with a protective film. The protective film used was a fluororesin-containing protective film with an adhesive layer (Overlaminate film SP 4114 available from Sumitomo 3M Ltd., of JAPAN).

The petroleum resistance of the marking film with the protective film was evaluated as follows:

Two rectangular pieces of the marking film each having a length of about 50 mm and a width of about 30 mm were provided. One piece was adhered to a melamine coated plate (available from PALTEC) with the adhesive layer of the marking film having an uneven adhesion surface, while the other piece was also adhered to a coated plate with the adhesive layer overlapping partially with the one piece to obtain a test sample. The overlapped width of the edges of the pieces in the width direction was about 10 mm. With such overlapping, a petroleum fuel could easily penetrate into the gap between the adhesive layer and the coated plate from the edges of the film so that the test was carried out under relatively severe conditions.

The test sample was fixed so that the longitudinal edge parts with a width of about 10 mm of the two pieces of the marking film were dipped in a diesel oil (available from Mobil Oil Co., Ltd.), and kept standing for 8 hours. Thereafter, the sample was dried in the shade at room temperature for 16 hours, and then its appearance was observed with an eye. At any part of the two pieces of the marking film, no peeling at the interface, no peeling between the layers such as the receptor layer, or no wrinkles were observed, and good appearance was maintained.

The moisture resistance of the marking film was evaluated as described above. No edges of the marking film turned up from the adherend (the melamine coated plate). Thus, the moisture resistance was ranked good.

### Reference Example 2

A receptor sheet in this example was produced in the same manner as in Example 1 except that a receptor layer was formed from the polycarbonate polyurethane only and a receptor film consisting of such a receptor layer was used. The thickness of the receptor sheet was 33 µm.

With the marking film of this example, the image observed through the protective film was clear. The adhesion of the toner was good, and no transfer of the toner to the adhesive tape was observed.

The petroleum resistance of the marking film was evaluated in the same way as in Example 1. No peeling at the interface, no peeling between the layers such as the receptor layer, and no wrinkles were observed, and good appearance was maintained.

The moisture resistance of the marking film was evaluated in the same way as in Example 1. No edges of the marking film turned up.

### Example 3

A receptor sheet in this example was produced in the same manner as in Example 2 except that polycaprolactone polyurethane was used as the polyurethane. The polyurethane used in this example was prepared by polymerizing polycaprolactone, MDI and neopentyl glycol as raw materials. The receptor layer (the thermoplastic resin film) had a Tg of 0°C.

With the marking film of this example, the image observed through the protective X film was clear. The adhesion of the toner was good, and no transfer of the toner to the adhesive tape was observed.

The petroleum resistance of the marking film was evaluated in the same way as in Example 1. No peeling at the interface, no peeling between the layers such as the receptor layer, and no wrinkles were observed, and good appearance was maintained.

The moisture resistance of the marking film was evaluated in the same way as in Example 1. No edges of the marking film turned up.

### Example 4

A receptor sheet in this example was produced in the same manner as in Example 2 except that a receptor sheet was formed from the phenoxy resin only.

A roll of a marking film was produced in the same manner as in Example 1 except that the receptor sheet of this example was used.

With the marking film of this example, the image observed through the protective film was clear. The adhesion of the toner was good, and no transfer of the toner to the adhesive tape was observed.

The petroleum resistance of the marking film was evaluated in the same way as in Example 1. No peeling at the interface, no peeling between the layers such as the receptor layer, and no wrinkles were observed, and good appearance was maintained.

The moisture resistance of the marking film was evaluated in the same way as in Example 1. No edges of the marking film turned up.

### Comparative Example 1

The marking film of this comparative example was produced in the same manner as in Example 2 except that an ionomer film having a thickness of 50 µm (HIMIRAN^{®} 1601 available from MITSUI DUPONT Co., Ltd.) was used as a receptor layer.

With the marking film of this comparative example, the image observed through the protective film was clear. The adhesion of the toner was good, and no transfer of the toner to the adhesive tape was observed.

The petroleum resistance of the marking film was evaluated in the same way as in Example 1. The receptor layer was swelled and the marking film had peeled from the adherend.

### Comparative Example 2

The receptor sheet of this comparative example was produced in the same manner as in Example 2 except that a receptor layer was formed from the following polyester polyurethane only.

The polyurethane used in this comparative example was prepared by polymerizing a raw material containing 1,6-hexanediol, 1,4-butanediol, adipic acid, IPDI and hydrogenated MDI. The polyurethane was prepared by solution polymerizing.

The marking film of this comparative example had low toner-transfer properties so that the clarity of the image (image quality) was lower than those in Examples 1 to 4. When the moisture resistance of the marking film was evaluated in the same way as in Example 1, the edges of the film turned up. Thus, the moisture resistance was apparently inferior to that in Examples 1 to 4.

## Claims

1. A marking film comprising:
(a) a receptor film having a front colorant-receptive surface, and a back surface opposing to said front surface, and
(b) an adhesive layer fixedly provided on said back surface of the receptor film and comprising an adhesive for adhering said receptor film to an adherend,
wherein said adhesive layer has projections containing said adhesive, which are formed on an adhesion surface to be adhered to said adherend, and depressions surrounding said projections, and wherein said depressions define conduits which communicate with the atmosphere between the surface of said adherend and the adhesion surface of said adhesive layer when said adhesive layer is adhered to said adherend,
**characterized in that** said receptor film comprises a receptor layer formed of a thermoplastic resin film having a surface which serves as said colorant-receptive surface, and said thermoplastic resin film comprises a resinous component containing at least one petrolcum-resistant resin selected from the group consisting of polyurethane comprising polyol units derived from polycaprolactone polyol and phenoxy resins.

2. The marking film according to claim 1, including a colorant received on said front surface.

3. The marking film according to claim 2, which further comprises a light-transmitting protective film covering said front surface of tho receptor film which receives said colorant, wherein said protective film comprises a fluororesin.

4. The marking film according to claim 1, wherein said thermoplastic resin film comprises a polyurethane and a phenoxy resin.

5. The marking film according to claim 1, wherein said receptor film consists of a single layer of a receptor layer made of said thermoplastic resin film.

6. The marking film according to claim 1 wherein said receptor layer has a glass transition temperature of 0 to 100°C.

7. A receptor sheet suitable for use in the production of a marking film according to claim 1, comprising said receptor film and said adhesive layer fixedly provided on the back surface of said receptor film which has a receptor layer comprising a thermoplastic resin film having a surface acting as said colorant-receptive surface to which a toner is transferred, wherein said thermoplastic resin film comprises a resinous component containing at least one petroleum-resistant resin selected from polyurethane comprising polyol units derived from polycaprolactone polyol and phenoxy resins, and said receptor layer has a glass transition temperature of 0 to 100°C.

## Patentansprüche

1. Markierungsfolie, umfassend:
(a) einer Empfangsfolie mit einer Farbstoff empfangenden Vorderfläche und mit einer Rückfläche, welche der Vorderfläche gegenüberliegt, und
(b) einer Klebstoffschicht, welche auf der Rückfläche der Empfangsfolie fest bereitgestellt ist und einen Klebstoff umfasst, welcher dazu dient, die Empfangsfolie an ein zu beklebendes Teil zu kleben,
wobei die Klebstoffschicht Vorsprünge, welche den Klebstoff enthalten und welche auf einer Klebfläche ausgebildet sind, die auf das zu beklebende Teil geklebt werden soll, und Vertiefungen, welche die Vorsprünge umgeben, enthält, und wobei die Vertiefungen Durchlässe, welche mit der Atmosphäre kommunizieren, zwischen der Fläche des zu beklebenden Teils und der Klebfläche der Klebstoffschicht definieren, wenn die Klebstoffschicht auf das zu beklebende Teil geklebt ist,
**dadurch gekennzeichnet, dass** die Empfangsfolie eine Empfangsschicht umfasst, welche aus einem Film eines thermoplastischen Harzes gebildet ist und eine Fläche aufweist, welche als die Farbstoff empfangende Fläche dient, und dass der Film des thermoplastischen Harzes eine harzartige Komponente umfasst, welche mindestens ein erdölbeständiges Harz enthält, ausgewählt aus der Gruppe bestehend aus Polyurethan, welches Polyoleinheiten umfasst, die aus Polycaprolactonpolyol abgeleitet sind, und Phenoxyharzen.

2. Markierungsfolie nach Anspruch 1, die einen Farbstoff auf der Vorderfläche enthält.

3. Markierungsfolie nach Anspruch 2, welche ferner einen lichtdurchlässigen Schutzfilm umfasst, der die Vorderfläche der Empfangsfolie bedeckt, welche den Farbstoff empfängt, wobei der Schutzfilm ein Fluorharz umfasst.

4. Markierungsfolie nach Anspruch 1, wobei der Film des thermoplastischen Harzes ein Polyurethan und ein Phenoxyharz umfasst.

5. Markierungsfolie nach Anspruch 1, wobei die Empfangsfolie aus einer einzelnen Schicht einer Empfangsschicht besteht, die aus dem Film des thermoplastischen Harzes hergestellt ist.

6. Markierungsfolie nach Anspruch 1, wobei die Empfangsschicht eine Glasübergangstemperatur von 0 bis 100 °C hat.

7. Empfangendes Bahnenmaterial geeignet zur Verwendung bei der Herstellung einer Markierungsfolie nach Anspruch 1, welches die Empfangsfolie und die Klebstoffschicht umfasst, die auf der Rückseite der Empfangsfolie fest bereitgestellt ist, welche eine Empfangsschicht aufweist, die einen Film eines thermoplastischen Harzes umfasst, welcher eine Fläche aufweist, die als die Farbstoff empfangende Fläche fungiert, auf welche ein Toner übertragen wird, wobei der Film des thermoplastischen Harzes eine harzartige Komponente umfasst, welche mindestens ein erdölbeständiges Harz enthält, ausgewählt aus Polyurethan, welches Polyoleinheiten umfasst, die aus Polycaprolactonpolyol abgeleitet sind, und Phenoxyharzen, und wobei die Empfangsschicht eine Glasübergangstemperatur von 0 bis 100 °C aufweist.

## Revendications

1. Film de marquage comprenant :
(a) un film récepteur comportant une surface antérieure réceptrice de colorant, et une surface postérieure opposée à ladite surface antérieure, et
(b) une couche adhésive fixée à ladite surface postérieure du film récepteur et comprenant un adhésif destiné à coller ledit film récepteur à une partie adhérée,
dans lequel ladite couche adhésive comporte des saillies contenant ledit adhésif, qui sont formées sur une surface d'adhésion à coller sur ladite partie adhérée, et des dépressions entourant lesdites saillies, et dans lequel lesdites dépressions définissent des conduits, qui communiquent avec l'atmosphère, entre la surface de ladite partie adhérée et la surface d'adhésion de ladite couche adhésive quand on colle ladite couche adhésive à ladite partie adhérée, **caractérisé en ce que** ledit film récepteur comprend une couche réceptrice formée d'un film de résine thermoplastique comportant une surface qui fait fonction de ladite surface réceptrice de colorant, et ledit film de résine thermoplastique comprend un composant résineux contenant au moins une résine résistante au pétrole sélectionnée dans le groupe constitué du polyuréthane comprenant des unités polyol dérivées du polyol polycaprolactone, et des résines phénoxydes.

2. Film de marquage selon la revendication 1, comprenant un colorant reçu sur ladite surface antérieure.

3. Film de marquage selon la revendication 2, lequel comprend en outre un film protecteur transmettant la lumière recouvrant ladite surface antérieure du film récepteur qui reçoit ledit colorant, dans lequel ledit film protecteur comprend une fluororésine.

4. Film de marquage selon la revendication 1, dans lequel ledit film de résine thermoplastique comprend un polyuréthane et une résine phénoxyde.

5. Film de marquage selon la revendication 1, dans lequel ledit film récepteur consiste en une seule couche d'une couche réceptrice constituée dudit film de résine thermoplastique.

6. Film de marquage selon la revendication 1, dans lequel ladite couche réceptrice a une température de transition vitreuse de 0 à 100 °C.

7. Feuille réceptrice convenant à une utilisation pour la production d'un film de marquage selon la revendication 1, comprenant ledit film récepteur et ladite couche adhésive fixée à la surface postérieure dudit film récepteur qui comporte une couche réceptrice comprenant un film de résine thermoplastique comportant une surface faisant fonction de ladite surface réceptrice de colorant à laquelle un toner est transféré, dans laquelle ledit film de résine thermoplastique comprend un composant résineux contenant au moins une résine résistante au pétrole sélectionnée parmi le polyuréthane comprenant des unités polyol dérivées du polyol polycaprolactone, et les résines phénoxydes, et dans laquelle ladite couche réceptrice a une température de transition vitreuse de 0 à 100°C.
